# EUROPÄISCHE PATENTANMELDUNG

(11) **EP 2 103 378 A1**
(43) Veröffentlichungstag der Anmeldung: **23.09.2009**
(21) Anmeldenummer: 08102724.5
(22) Anmeldetag: 18.03.2008
(51) Int. Cl.: B23Q 17/09, B23Q 11/00, G05B 19/4065

(54) **Werkzeugverschleiss in Bearbeitungsmaschinen**

(71) Anmelder: Klingelnberg AG, 8023 Zürich (CH)
(72) Erfinder: Mack, Franz, 76275 Ettlingen (DE)
(74) Vertreter: OK pat AG

(57) **Zusammenfassung**

Die Erfindung betrifft eine Bearbeitungsmaschine (10) zur automatisierten Serienbearbeitung von Werkstücken (1) mittels eines Werkzeugs (20), bei der der Verschleiß des Werkzeugs (20) durch eine Messung des Ist-Temperaturwerts (X) des Werkstücks (1) mittels eines Rechners (3) ermittelt wird und bei der Überschreitung eines Referenzwertes ein Warnhinweis (6) bzw. ein automatischer Wechsel des Werkzeugs (20) ausgelöst wird.

## Beschreibung

Die vorliegende Erfindung betrifft eine Bearbeitungsmaschine zur automatisierten Serienbearbeitung von Werkstücken mittels eines Werkzeugs sowie ein entsprechendes Verfahren.

Werkzeuge (bzw. nur deren auswechselbaren Wendeplatten oder Stabmesser) für die umformende oder die spanende Bearbeitung bestehen meistens aus beschichteten oder unbeschichteten Schneidstoffen wie Hartmetall (HM), Hochgeschwindigkeitsstahl (HSS), Cermet, Keramik oder Bornitrid. Obwohl diese beispielhaft genannten Schneidstoffe sehr hart und widerstandsfähig sind, unterliegen sie einem Verschleiß. Dieser Verschleiß ist insbesondere bei einer seriellen Produktion nachteilig, bei der die produzierten, einzelnen Werkstücke innerhalb enger Toleranzen von wenigen Millimetern oder gar Bruchteilen von Millimetern liegen müssen.

Der Verschleiß eines Werkzeugs wird üblicherweise empirisch nach Erreichen einer bestimmten Anzahl bearbeiteter Werkstücke und visuell durch den Maschinenbediener festgestellt. Die visuelle Begutachtung geschieht durch persönliche Begutachtung der Schneid- bzw. Bearbeitungsfläche oder -kante des Werkzeugs oder aber auch durch Begutachtung der bearbeiteten WerkstückOberfläche.

Diese Methoden zum Feststellen des Verschleißes sind jedoch insgesamt zu ungenau, weil einerseits eine subjektiv-persönliche Komponente dabei ist und andererseits die Abnützung des Werkzeugs nicht immer linearen Gesetzmäßigkeiten folgt, was eine Vorhersagbarkeit des Verschleißverhaltens unsicher macht.

Neben den langsam auftretenden Verschleißformen gibt es auch plötzlichen Verschleiß (z.B. Kolkverschleiß) eines Werkzeugs, der nur schwer vorhersagbar ist.

Es gibt Bearbeitungsmaschinen, die mit einem Messzentrum verknüpft sind, das es erlaubt, entweder die Werkzeuge von Zeit zu Zeit zu vermessen, oder die Werkstücke zu vermessen, nachdem sie einer Bearbeitung unterzogen wurden. Es ist ein Nachteil dieses Ansatzes, dass der apparative und zeitliche Aufwand relativ groß ist, um feststellen zu können, ob ein Werkzeug verschlissen ist oder ob sich ein Verschleiß abzeichnet.

In manchen Bearbeitungsmaschinen wird daher der Strom oder das Drehmoment ermittelt oder beobachtet, der vom Spindelantrieb aufgenommen wird. Aus dem Stromverlauf oder dem Drehmomentverlauf können gewisse Rückschlüsse über den Widerstand gezogen werden, der mechanisch auf das Werkzeug einwirkt. Dieser mechanische Widerstand wiederum lässt gewisse Rückschlüsse auf den Verlauf eines Bearbeitungsprozesses zu. Diese Art der Betrachtung hat aber den Nachteil, dass sie eine ganze Reihe von bewegten Elementen nur gesamthaft betrachtet. Wenn z.B. der Strom deutlich ansteigt, der eingeprägt wird, um die Werkzeugspindel samt Werkzeug zu drehen, kann dies unter anderem auch daran liegen, dass ein Spindellager oder eine Wicklung des Spindelantriebs defekt ist. Diese Art der indirekten Messung erweist sich daher als relativ ungenau.

Die genannten Nachteile führen in der Produktion von Werkstücken, insbesondere in der sehr kostenintensiven und -optimierten Serienfertigung, unter anderem zu folgenden Problemen:

Es kann ein unnötig hoher Verbrauch an teuren Bearbeitungswerkzeugen eintreten, falls die Werkzeuge z.B. zu früh ausgewechselt werden.

Es kann zu unnötigen Standzeiten kommen, da die Maschine während des Werkzeugwechsels typischerweise nicht produktiv eingesetzt werden kann.

Werkzeuge, die nicht gut "schneiden" oder generell höhere Reibungskräfte der Bearbeitung des Werkstücks entgegensetzen, verbrauchen mehr antreibende Energie (in der Regel Strom).

Ein Werkzeug, das nicht schneidet, unterliegt höheren Belastungen, die zu einem Bruch des Werkzeugs führen können. Darüber hinaus kann der Bruch des Werkzeugs eine irreparable Beschädigung des Werkstücks nach sich ziehen oder sogar eine Beschädigung eines Maschinenteils. Solche Brüche bergen darüber hinaus auch eine Verletzungsgefahr für das Bedienpersonal.

Die Bearbeitung mit einem verschlissenen Werkzeug führt in der Regel zu einer raueren Oberfläche. Die Oberflächenrauheit eines Werkstücks unterliegt jedoch oft einer Toleranzvorgabe, die innerhalb enger Grenzen liegt. So kann z.B. ein Werkstück, das zwar eine (enge) Toleranzvorgabe für die Außenabmessungen einhält, aber eine enge Toleranzvorgabe für die Oberflächenrauheit nicht einhält, unter Umständen schon Ausschuss sein, weil eine (teure) Einzel-Nachbearbeitung der Oberflächenrauheit des Werkstücks gar nicht mehr durchgeführt werden kann.

Des Weiteren kann sich das Tragbild und die Mikrogeometrie, aber auch z.B. die sogenannte "Teilung" (z.B. bei Zahnrädern) verschlechtern.

Darüber hinaus verursacht eine Prüfung des Werkzeugs bei stehender Maschine teure Standzeiten.

Der Erfindung liegt daher die Aufgabe zugrunde, die angegebenen Nachteile zu beseitigen, indem eine verlässlichere Messung des Verschleißes eines Werkzeugs bereit gestellt wird.

Diese Aufgabe wird erfindungsgemäß für die Vorrichtung durch die Merkmale des kennzeichnenden Teils des unabhängigen Hauptanspruchs 1 und für das Verfahren durch die Verfahrensschritte des Anspruchs 12 gelöst.

Weitere vorteilhafte Ausgestaltungen ergeben sich aus den jeweiligen Unteransprüchen.

Gemäß Erfindung werden Messergebnisse einem Vergleich unterzogen und es werden bei Erreichen eines kritischen Wertes bestimmte automatisierte Prozesse in der Bearbeitungsmaschine ausgelöst.

Die vorliegende Erfindung basiert auf der Erkenntnis, dass zwischen einem Ist-Temperaturwert eines Werkstücks und dem Verschleißgrad des Werkzeugs, das zur Bearbeitung des Werkstücks eingesetzt wurde, ein messbarer Zusammenhang besteht. Ein rechnerisches In-Bezug-Setzen des Ist-Temperaturwerts zu einem Temperaturvergleichswert (z.B. einem vorher in den Rechner eingegebenen Temperaturvergleichswert) ergibt erfindungsgemäß ab einer kritischen Größe ein Signal (auch Steuersignal genannt), das weiterhin erfindungsgemäß als Steuersignal für das Auslösen bestimmter automatisierter Prozesse in der Bearbeitungsmaschine verwendet wird.

Eine weitere erfindungsgemäße Ausgestaltungsvariante benützt die temperaturbezogene Werkstückmessung (auch indirekte temperaturbasierte Verschleißmessung genannt) für eine weitergehende automatische Maßnahme. Hierbei wird das Steuersignal einem Hauptschalter (oder Notschalter) der Bearbeitungsmaschine zugewiesen. Üblicherweise ist mit diesem Schalter eine Bremse gekoppelt, die optional jedoch auch einzeln angesteuert sein kann, sodass ein augenblicklicher automatischer Stopp der Bearbeitungsmaschine durch das Steuersignal ausgelöst werden kann. Dieses macht insbesondere dann Sinn, wenn die Grenzen der Fertigungstoleranzen so eng sind, dass ein Verschleiß des Werkzeugs sehr schnell die Produktion von Ausschuss oder aufwändig nachzubearbeitenden Werkstücken nach sich zieht. Ein durch das Steuersignal automatisch in die Wege geleiteter Stopp der Bearbeitungsmaschine kann auch dann eine sinnvolle Sicherheitsmaßnahme sein, wenn aufgrund von sehr schwierig zu bearbeitendem Material oder aufgrund sehr großhubiger Bearbeitungen relativ unvermittelt nach ersten Verschleißanzeichen des Werkzeugs ein Material- oder Werkzeugbruch droht.

Eine weitere automatische Maßnahme, die durch das Steuersignal eingeleitet sein kann, ist das automatische Verfahren des Werkzeugs oder des Spannfutters oder von beidem gleichzeitig, sodass - insbesondere bei oben beschriebenen, kritischen Bearbeitungsparametern - kein unerwünschter, lagerschädigender, abrupter Stopp der gesamten Bearbeitungsmaschine mitten in der spanabhebenden Bearbeitung stattfindet. Das Werkzeug bzw. das (die) Werkzeug(e) haltende Spannfutter werden hierbei idealerweise voneinander entfernt, indem der Motor für den Vorschub der Bearbeitung zuerst auf Vorschub Null reduziert wird und anschließend der (die) Zustellmotor(en) für die Bearbeitung so aktiviert wird (werden), dass eine Bewegung ausgelöst wird, die der Zustellbewegung entgegengesetzt ist.

Eine weitere automatisch eingeleitete Maßnahme an einer erfindungsgemäßen Bearbeitungsmaschine ist eine automatische Auswechslung des bearbeitenden Werkzeugs. Bevorzugtermaßen geschieht dieses so, dass der automatische Wechsel keine Standzeit der Maschine nach sich zieht, z.B. wegen einer dann nötigen Justage bzw. Abnullung des neuen Werkzeugs. Das heißt, die Bearbeitungsmaschine wird von vornherein mit zwei identischen Werkzeugen mit identischen Bearbeitungsdaten und -koordinaten gerüstet, oder es findet erfindungsgemäß während dem Bearbeiten eines Werkstücks mit einem dritten Werkzeug ein Abgleich aufeinander statt. Optional kann dieser Abgleich zusammen mit einer automatischen Korrektur vom tatsächlichen Bearbeitungsmaß mit abgenütztem Werkzeug zum ursprünglichen Bearbeitungsmaß mit neuem Werkzeug vorgenommen werden. Das Ausmaß der automatischen Korrektur kann in Funktion des gemessenen Ist-Temperaturwerts erfolgen. Dieses bedingt allerdings, dass der Rechner nicht nur zur Ausgabe eines simplen Ja/Nein-Steuersignals ausgestattet sein darf. Er muss, je nach Ausmaß des Über- oder Untersteigens des Ist-Temperaturwerts im Vergleich zum Temperaturvergleichswert, ein qualitatives Steuersignal ausgeben.

Eine automatisiert arbeitende Bearbeitungsmaschine kann durch die Erfindung zuverlässiger als bisherige Maschinen einen Werkzeugverschleiß erkennen und einen automatischen Werkzeugwechsel durch das Steuersignal auslösen. Dadurch kann einen solche Maschine über einen längeren Zeitraum komplett unbeaufsichtigt oder mit nur geringem personellem Aufwand betrieben werden.

Weiterhin erfindungsgemäß kann der Wechsel auf ein anderes Werkzeug so ausgestaltet sein, dass die Bearbeitungsmaschine mit einem Werkzeugrevolver ausgestattet ist, der mehr als ein Werkzeug trägt. Durch ein Drehen des Werkzeugrevolvers kann ein anderes, nicht verschlissenes Werkzeug zum Einsatz gebracht werden.

Weiterhin erfindungsgemäß kann der Wechsel auf ein anderes Werkzeug so ausgestaltet sein, dass alle Werkzeuge der Bearbeitungsmaschine eine vorhergehende Abnullung erfahren haben, sodass alleine ein rechnerischer Transfer der Bearbeitungskoordinaten des alten Werkzeugs auf ein geeignetes neues Werkzeug genügt.

Gemäß der Erfindung wird ein Bezug gesucht zu der/den Temperaturen von identischen oder ähnlichen Werkstücken, die vorher auf derselben oder einer baugleichen Maschine bearbeitet wurden. Es kann aber auch ein Bezug zu rechnerisch ermittelten Werten hergestellt werden. In einer weiteren Ausführungsform wird Bezug genommen auf einen vorher am selben Werkstück gemessenen Temperaturvergleichswert, d.h. in diesem Fall erfolgt eine erste Messung beim Einbringen des Werkstücks in die Bearbeitungsmaschine und eine zweite Messung erfolgt nach dem Bearbeiten, z.B. bei der Entnahme des Werkstücks oder kurz nach dessen Entnahme.

Einer anderen erfindungsgemäßen Ausgestaltungsvariante zufolge, wird die Verschleißgrenze dynamisch aus der Aneinanderreihung von verschiedenen Messwerten (Anstieg der Temperatur bzw. ihrer Erhöhung von Werkstück zu Werkstück) ermittelt. Des Weiteren sind im Rechner Erfahrungs-Referenzwerte abgelegt, die sich nicht nur auf bestimmte Werkzeuge und deren Materialien, sondern auch auf bestimmte Werkstücke und deren Materialien und auch auf bestimmte Bearbeitungsparameter bzw. Bearbeitungsprogramme beziehen.

Ein erfindungsgemäßer Temperatursensor ermittelt gegebenenfalls die Raumtemperatur sowie die Werkstücktemperatur (vor und) nach der Bearbeitung berührungslos oder -behaftet. D.h., der Temperatursensor kann ein Kontakt-Messsensor oder ein berührungslos arbeitender Infrarot-Messsensor sein. Der erfindungsgemäße Temperatursensor kann aber auch so ausgeführt sein, dass er lediglich einen Ist-Temperaturwert, respektive ein analoges oder digitales Signal, eine Signalgröße oder Daten liefert, die eine Aussage über den soeben gemessenen Temperaturwert zulassen.

Im Falle eines Kontakt-Messsensors kann die Bearbeitungsmaschine gemäß einer weiteren erfindungsgemäßen Ausgestaltungsvariante eine Eichfläche aufweisen, die eine konstante Temperatur vorgibt. Der Kontakt-Messsensor ist dabei so ausgestaltet, dass er vor jeder Messung (oder von Zeit zu Zeit) der Temperatur eines Werkstücks die Eichfläche berührt, deren Temperatur annimmt und somit bei der darauf folgenden Messung der Temperatur des Werkstücks die exakte Temperatur-Differenz des Werkstücks zur Temperatur der Eichfläche misst.

Die Bearbeitungsmaschine kann auch weiterhin erfindungsgemäß mit zwei Kontakt-Messsensoren ausgestattet sein, wobei einer die Temperatur des Werkstücks vor der Bearbeitung und der andere die Temperatur desselben Werkstücks nach der Bearbeitung misst. Hierbei sind die beiden Kontakt-Messsensoren vorzugsweise in der Lage, aufeinander zuzufahren und in einer gemeinsamen Berührung während des Bearbeitungszyklus des Werkstücks "geparkt" zu werden. Aufgrund der Berührung der beiden Kontakt-Messsensoren findet ein Temperatur-Abgleich der beiden Messsensoren statt, d.h. beide Messsensoren arbeiten stets mit der gleichen Bezugstemperatur.

Der oder die Temperatursensoren, egal, ob Kontakt-Messsensoren oder kontaktlose Messsensoren, können grundsätzlich z.B. an folgenden Anbringungsorten (alternativ, aber auch kumulativ) an bzw. in der Bearbeitungsmaschine angeordnet sein:
- An den Greifern des Einlege- bzw. Herausnehmearmes;
- im Bereich der Stapelung der fertig bearbeiteten Werkstücke zur Messung der Temperatur der bearbeiteten Werkstücke;
- im Bereich der Stapelung der noch zu bearbeitenden Rohlinge zur Messung der Temperatur des Werkstücks vor der Bearbeitung;
- im Bereich der Ladeöffnung der Bearbeitungsmaschine;
- im Bereich des Spannfutters für das Werkstück;
- im Bereich des Werkzeugkopfes;
- allgemein im Bereich des (normalerweise abgeschlossenen) Arbeitsraums der Bearbeitungsmaschine und/oder
- im allgemeinen Umfeld der Bearbeitungsmaschine für eine manuelle Führung durch Bedienpersonal.

Grundsätzlich sind solche Anbringungsorte für den Temperatursensor bevorzugt, die keine oder nur geringe Standzeiten der Bearbeitungsmaschine verursachen. Mit Standzeiten sind nicht nur Zeiten gemeint, in denen die Bearbeitungsmaschine gar nicht in Betrieb ist, sondern auch die Zeiten, in denen z.B. gerade das bearbeitete Werkstück mit einem Rohling gewechselt wird und somit gerade keine (z.B. spanabhebende) Bearbeitung stattfindet.

Die erfindungsgemäße Temperaturmessung ist sowohl mit gesteuerten Robotern, die aktiv die Werkstücke einlegen und herausnehmen, als auch mit Ladevorrichtungen kombinierbar, die die Bearbeitungsmaschine automatisch oder durch Bedienpersonal "beschicken".

Die vorliegende Patentanmeldung beschreibt die Messung der Temperatur des Werkstücks als Indikator für den Verschleiß bzw. den Verschleißgrad des Werkzeugs. Daher wird dieser neue Ansatz auch als "indirekte temperaturbasierte Verschleißmessung" bezeichnet. Genauso kann jedoch auch die Temperatur des Werkzeugs als Indikator für dessen Verschleißgrad dienen. Dieses kann insbesondere dann bevorzugt sein, wenn das Werkzeug aus einem Material mit einer schlechteren Wärmeleitfähigkeit (z.B. Stahl) als das Material des Werkstücks (z.B. Aluminium) besteht. Die Folge ist ein verlässlicherer Temperaturwert als Indikator, weil er länger nahe am Ist-Temperaturwert unmittelbar nach der Bearbeitung bleibt.

Insgesamt wird dem Fachmann klar, welche Vorteile die Erfindung bzw. ihre Ausgestaltungsvarianten bringen:

Es werden Ressourcen geschont. Das kann der antreibende Strom sein, aber auch personelle Ressourcen, die mit weniger Instandhaltungsaufwand gebunden werden. Durch den erhöhten Automatisierungsgrad sind weniger Bedienpersonal und eine Produktivitätssteigerung möglich. Des Weiteren werden Ressourcen bei der Rohlingsherstellung geschont, wenn weniger Ausschuss produziert wird.

Es werden unproduktive und teure Standzeiten der Bearbeitungsmaschine vermieden.

Eine gleichbleibende Prozessqualität ist besser gewährleistet.

Die Oberfläche (Rauheit) der bearbeiteten Werkstücke, ihre Geometrie und Topographie bleiben während der Serienbearbeitung länger stabil.

Es passieren weniger Beschädigungen von Werkstück, Werkzeug oder an der Maschine. Es geht auch der Verbrauch an Werkzeugen deutlich zurück, da Werkzeuge erst dann gewechselt werden, wenn tatsächlich ein Verschleiß erkannt wird.

Weitere ähnliche Ausführungsformen erhält man durch entsprechende Anpassung der einzelnen erfindungswesentlichen Elemente.

Die Erfindung wird im Folgenden beispielhaft unter Bezugnahme auf die Figuren näher beschrieben. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an. Es zeigen dabei
- FIG. 1: eine schematische Darstellung einer ersten erfindungsgemäßen Bearbeitungsmaschine mit einem Temperatursensor, der beispielhaft an einem Einlege- bzw. Herausnehme-Arm platziert ist,
- FIG. 2: eine schematische Darstellung einer zweiten erfindungsgemäßen Bearbeitungsmaschine mit einer Ladevorrichtung und
- FIG. 3: eine schematische Darstellung einer dritten erfindungsgemäßen Bearbeitungsmaschine zum Bearbeiten von Werkstücken, die mittels einem Ladeband an einem vertikal stehenden Werkzeughalter vorbeigeführt werden.

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder andere Fachgebiete übertragen. In anderen Fachgebieten sind die Begriffe sinngemäß anzuwenden.

Unter dem Begriff "Bearbeitungsmaschine" ist im Sinne der vorliegenden Patentanmeldung insbesondere eine Werkzeugmaschine gemeint. Die Bearbeitung umfasst insbesondere die automatisierte Serienbearbeitung von einer Reihe von identischen oder geometrisch ähnlichen Werkstücken. Gemäß einschlägiger Lexika und DIN-Normen werden unter Werkzeugmaschinen alle Maschinen verstanden, die zur Bearbeitung von Werkstücken mit Werkzeugen dienen. Es ist allen eine gesteuerte Relativbewegung zwischen Werkzeug und Werkstück gemeinsam, die zu einer umformenden, trennenden (d.h. zerteilenden, spanenden und abtragenden) und fügenden Bearbeitung führen kann. Die vorliegende Patentanmeldung umfasst alle genannten Bearbeitungsmethoden, insbesondere deshalb, weil bei allen Bearbeitungsmethoden Wärme entsteht. Je abgenützter das Werkzeug ist, desto mehr Wärme entsteht bei der Bearbeitung. Das Werkstück dient als Wärmesenke, die im Prinzip wie eine Art Gedächtnis für die vorangegangenen Bearbeitungsschritte dient. Der Begriff "Ist-Temperaturwert" wird als Synonym verwendet für analoge oder digitale Signale, Signalgrößen oder Daten, die eine Aussage über den soeben gemessenen Temperaturwert zulassen. Es muss sich dabei nicht um ein Signal handeln, das eine Aussage über die absolut gemessene Temperatur zulässt. Je nach Ausführungsform der Erfindung genügt es, auch eine relative Aussage in Bezug auf vorher getätigte Messungen oder in Bezug auf vorgegebene Werte (z.B. den Temperaturvergleichswert) zu machen.

Der Begriff "Temperaturvergleichswert" wird als Synonym verwendet für analoge oder digitale Signale, Signalgrößen oder Daten, die im Rahmen einer vorher getätigten Messung ermittelt wurden, oder die (manuell oder durch einen Rechner) vorgegeben wurden.

Ein Ist-Temperaturwert wird gemäß Erfindung als "kritisch" bezeichnet, wenn er eine oder mehrere der folgenden Bedingungen erfüllt:
- Der Ist-Temperaturwert liegt oberhalb einer vorgegebenen Schwellentemperatur;
- der Ist-Temperaturwert zeigt eine starke Änderung gegenüber einem oder mehreren vorher gemessenen Ist-Temperaturwerten.

Sobald ein kritischer Ist-Temperaturwert erreicht ist, wird gemäß einer Grundvariante einer erfindungsgemäßen Bearbeitungsmaschine z.B. auf einem Display eine Anzeige ausgelöst. Diese Anzeige kann beispielsweise eine Aufforderung zu einem Werkzeugwechsel sein, sodass ein Maschinenbediener oder sonstiges Personal die automatisierte Serienbearbeitung von Werkstücken stoppt und manuell für einen Werkzeugwechsel sorgt. Das Gleiche kann auch über eine akustische Warnvorrichtung erfolgen, die insbesondere dann bevorzugt ist, wenn beispielsweise ein gesamter Maschinenpark über einen hohen Automatisierungsgrad verfügt und eine Bedienperson für mehrere Maschinen zuständig ist.

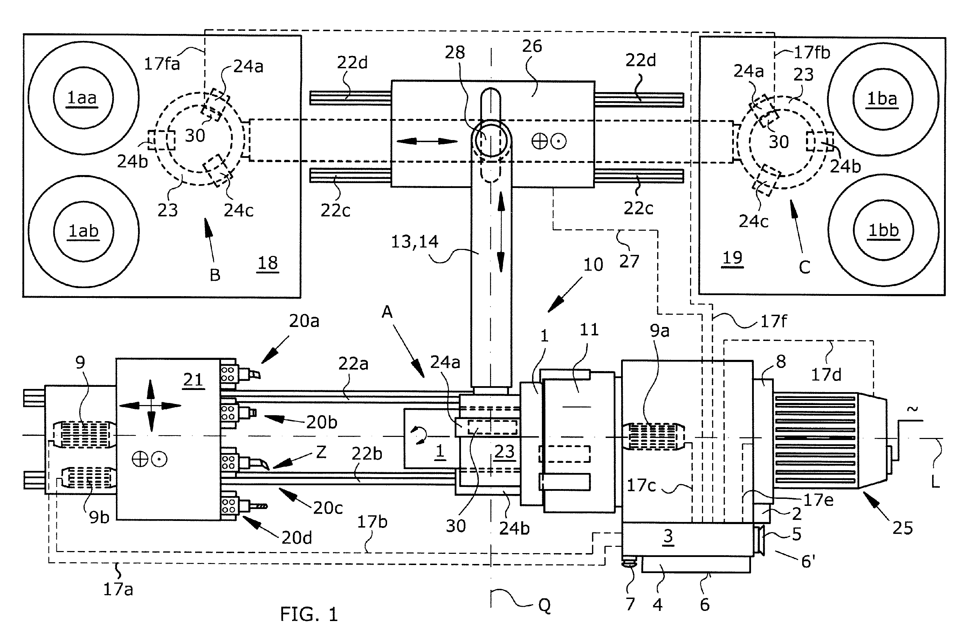

In FIG. 1 ist eine andere Bearbeitungsmaschine 10, beispielsweise als Drehmaschine in Draufsicht gezeigt. Details der vorliegenden Erfindung werden anhand dieser Bearbeitungsmaschine 10 beschrieben. Die anderen Ausführungsformen funktionieren analog, zumindest was die grundlegenden Aspekte der Erfindung anbelangt.

Die Bearbeitungsmaschine 10 weist ein Spannfutter 11 auf, in das ein Werkstück 1 eingespannt werden kann. Drehungen des Spannfutters 11 werden durch einen (z.B. mit 380 V gespeisten) Hauptmotor 25 angetrieben. Es ist jedoch auch ein Stellmotor 9a gezeigt, der einerseits das Spannfutter antreibt, aber auch so ausgelegt sein kann, dass er das Spannfutter 11 entlang einer Längsachse L bewegt. Die Bearbeitungsmaschine 10 kann somit grundsätzlich eine klassische Drehbank, aber auch ein universelles Bearbeitungszentrum sein, das sowohl drehen, als auch fräsen bzw. stoßen kann. Dem Spannfutter 11 bzw. Werkstück 1 gegenüber liegt ein Werkzeughalter 21, der beispielhaft unterschiedliche Werkzeuge 20a-20d aufnehmen kann. Der Werkzeughalter wird für Schwenkbewegungen von einem Stellmotor 9b angetrieben. Über Schwenkbewegungen hinaus ist der Werkzeughalter 21 entlang der Längsachse L, aber auch parallel zu einer Querachse Q gesteuert bewegbar. Für die linearen Bewegungen entlang der Längsachse L sind Kulissen 22a und 22b dargestellt, auf denen der Werkzeughalter 21 verfahrbar ist. Für die translatorische Querbewegung des Werkzeughalters 21 sind entsprechende Kulissen oder Schienen nicht näher dargestellt. Des Weiteren ist der Werkzeughalter 21 auf-und abwärts bewegbar. Jedenfalls sorgt ein Stellmotor 9 und ein nicht näher dargestelltes Getriebe für alle 6 Bewegungsrichtungen. Wie oben schon erwähnt, kann die Bearbeitungsmaschine 10 so ausgestaltet sein, dass sich das Spannfutter 11 nicht nur dreht, sondern auch lineare Bewegungen in alle 6 Richtungen ausführen kann. Die Bearbeitungsmaschine 10 würde dadurch zu einem sogenannten Bearbeitungs- oder Fertigungszentrum, das, in der Regel CNC-gesteuert, auch fräsen kann und jede erdenkliche relative Bearbeitungsbewegung zwischen Werkzeug 20 und Werkstück 1 ausführen kann. Auch mehrere der beschriebenen Bearbeitungsbewegungen sind gleichzeitig ausführbar.

Besonders bevorzugt ist eine Ausführungsform der Bearbeitungsmaschine 10, bei der entweder das Spannfutter 11 samt Werkstück 1, oder der Werkzeughalter 21 samt Werkzeugen 2a bis 2d um eine vertikale Achse geschwenkt werden kann.

Die Werkzeuge 20a-20d sind einem Verschleiß Z unterworfen (z.B. an ihren Bearbeitungskanten bzw. -spitzen). Zur Messung dieses Verschleißes Z ist die Bearbeitungsmaschine 10 erfindungsgemäß mit einem Temperatursensor 30 ausgestattet. Dieser ist in der beispielhaft dargestellten Ausgestaltungsvariante in einem Finger 24a eines Greifers 23 eines Einlege- bzw. Herausnehme-Armes 13, 14 angeordnet und in der gezeigten Position beim Einlegen und/oder beim Herausnehmen des Werkstücks 1 in der Lage, die Temperatur des Werkstücks 1 zu messen.

Der Einlege- bzw. Herausnehme-Arm 13, 14 kann auch jeweils einen separaten Arm für das Einlegen und einen für das Herausnehmen des Werkstücks 1 aufweisen. Der Einlege- bzw. Herausnehme-Arm 13, 14 ist auf einem Steuerkasten 26 so angeordnet, dass alle erforderlichen Bewegungen (z.B. Bewegungen in 6 Bewegungsrichtungen) ausführbar sind. Die gezeigte Ausgestaltungsvariante eines kombinierten Einlege- und Herausnehme-Armes 13, 14 ist mit dem Steuerkasten 26 auf Kulissen 22c und 22d in Bewegungsrichtungen parallel zur Längsachse L verfahrbar. Für Bewegungen entlang der Querachse Q ist in der dargestellten Ausgestaltungsvariante der Einlege- und Herausnehme-Arm 13, 14 selbst verfahrbar. Des Weiteren ist der Steuerkasten 26 auf- und abwärts verfahrbar. Darüber hinaus ist der Einlege-und Herausnehme-Arm 13, 14 in einem Gelenk 28 schwenkbar. Der Steuerkasten 26 ist über eine Steuerungsleitung 27 mit dem Rechner 3 der Bearbeitungsmaschine 10 verbunden, sodass in Funktion des jeweiligen Bearbeitungsstandes eines Werkstückes 1 mit dem Greifer 23 ein gesteuertes Anfahren folgender Positionen möglich ist:
- Position A = Position des Greifers 23 beim Spannfutter 11 für das Einlegen oder Herausnehmen eines Werkstücks 1;
- Position B = Position des Greifers 23 bei einer Stapelung 18 für Rohlinge 1aa, 1ab;
- Position C = Position des Greifers 23 bei einer Stapelung 19 für fertig bearbeitete Werkstücke 1ba, 1bb und
- einer vierten, nicht dargestellten Position D in der der Greifer 23 eine Eichfläche 15 anfährt, um eine Eichung bzw. Temperaturangleichung vorzunehmen.

Erfindungsgemäß kann der Temperatursensor 30 in einem Finger 24 des Greifers 23 angebracht sein. Er ist in der Lage, in der Position A die Temperatur des eingespannten Werkstücks 1 zu messen, in der Position B die Temperatur des Rohlings 1a und in der Position C die Temperatur eines fertig bearbeiteten Werkstücks 1b. Der gemessene Temperaturwert kann über eine dafür vorgesehene Verbindungsleitung 17f in den Rechner 3 gelangen. Denkbar ist jedoch auch eine Übertragung des Temperaturwertes mittels fester Kontakte, die in den Positionen A-C installiert sind und in die der Einlege- und Herausnehme-Arm 13, 14 hineinfährt. Des Weiteren ist eine drahtlose Übermittlung (z.B. mittels Funk oder Infrarot) des gemessenen Temperaturwertes gut realisierbar. Dadurch würde sich der Einlege- und Herausnehme-Arm 13, 14 frei drehen und bewegen können. Nachdem in den Rechner 3 der gemessene Temperaturwert eingegangen ist, wird er verarbeitet, d.h. z.B. mit vorher eingegebenen Referenzwerten verglichen. Wenn der Temperaturvergleichswert kritisch ist, dann ist der Rechner 3 in der Lage, z.B. das Display 4 anzusteuern. Dieses wäre z.B. mit einem Warnhinweis 6 in Form einer Aufschrift "Bitte Werkzeug wechseln" durchführbar. Der Rechner 3 kann alternativ oder gleichzeitig einen Warnhinweis 6' in Form einer Ansage oder eines Warntons über einen Lautsprecher 5 ausgeben. Um einen sofortigen Stopp der Bearbeitung zu erreichen, kann der Rechner 3 mit dem Notschalter 7 und/oder der Bremse 8 über eine Verbindungsleitung 17e und/oder der Stromzufuhr des Hauptmotors 25 über eine Verbindungsleitung 17d und/oder dem Stellmotor 9a über eine Verbindungsleitung 17c zusammen wirken. Für ein Verfahren des Werkzeugs geht über eine Verbindungsleitung 17a vom Rechner 3 ein Steuersignal an den Stellmotor 9. Für ein Abstellen des Vorschubs bzw. ein Verschwenken des Werkzeughalters 21 gibt der Rechner 3 ein Steuersignal über eine Verbindungsleitung 17b.

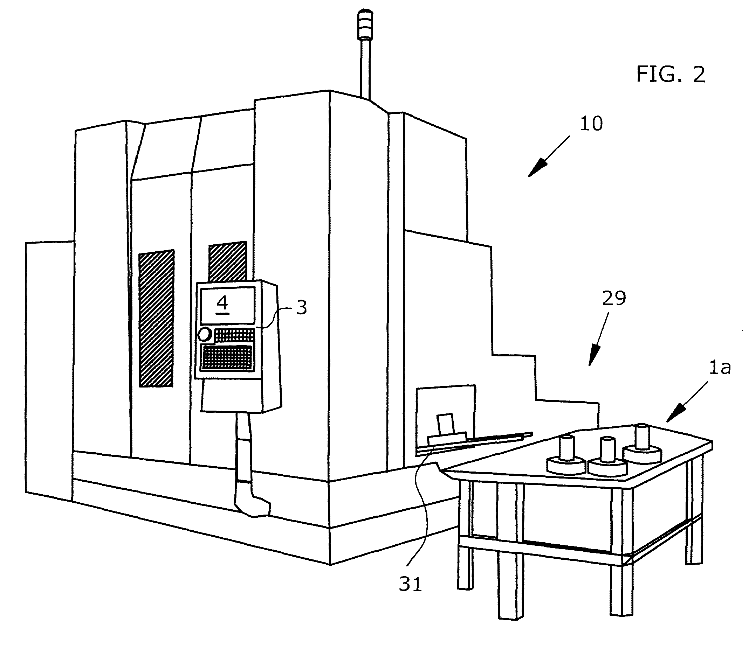

FIG. 2 zeigt schematisch eine weitere erfindungsgemäße Bearbeitungsmaschine 10 mit geschlossenen Schutztüren und -verkleidungen und einem Rechner 3 mit einem Display 4. Neben der Bearbeitungsmaschine 10 steht eine Ladevorrichtung 29, die Rohlinge 1a über ein Ladeband 31 der Bearbeitungsmaschine 10 zuführt. Im Inneren kann diese Bearbeitungsmaschine 10 mit erfindungsgemässen Mitteln ausgestattet sein, die eine indirekte Verschleissermittlung anhand der an bearbeiteten Werkstücken gemessenen Temperaturen erlaubt.

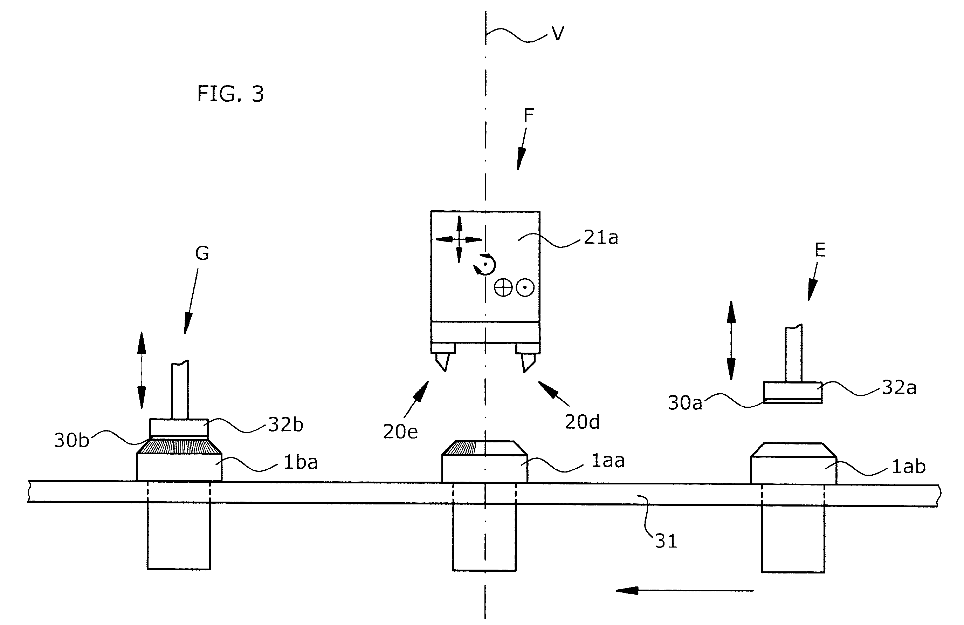

In FIG. 3 ist schematisch eine Bearbeitung der Rohlinge 1 auf einem Ladeband 31 mittels eines in einer Vertikalachse V stehenden Werkzeughalters 21a gezeigt. Der Werkzeughalter 21a ist in alle 6 Richtungen gesteuert bewegbar und kann um eine Achse geschwenkt werden, die senkrecht auf der Zeichenebene steht. Der Werkzeughalter 21a kann unterschiedliche Werkzeuge tragen (analog zu Fig. 1). Bevorzugt ist eine Ausführungsform, bei der der Werkzeughalter 21a einen Stirnmesserkopf mit Stabmessern trägt, wie schematisch angedeutet. Das Ladeband 31 ist von rechts nach links gesteuert bewegbar, sodass in einer ersten Position E ein Stempel 32a mit einem Temperatursensor 30a den Ist-Temperaturwert eines Rohlings 1ab misst. In einer zweiten Position F bearbeitet der Werkzeughalter 21a einen Rohling 1aa. In einer dritten Position G misst ein Stempel 32b mit einem Temperatursensor 30b den Ist-Temperaturwert eines bearbeiteten Werkstücks 1ba. Die in dieser Figur gezeigte Bearbeitung in der Vertikalen ist vorteilhaft, weil die Späne herunterfallen können und den Bearbeitungsprozess nicht stören.

### Bezugszeichenliste

- 1 -: Werkstück
- 1a -: Rohling
- 1b -: bearbeitetes Werkstück
- 2 -: Speichermittel
- 3 -: Rechner
- 4 -: Display
- 5 -: akustische Warnvorrichtung
- 6 -: Warnhinweis
- 7 -: Hauptschalter
- 8 -: Bremse
- 9, 9a, 9b -: Stellmotor
- 10 -: Bearbeitungsmaschine
- 11 -: Spannfutter
- 12 -: Kontakt-Messsensor
- 13 -: Einlege-Arm
- 14 -: Herausnehme-Arm
- 15 -: Eichfläche
- 16 -: kontaktloser Infrarot-Messsensor
- 17a-17f -: Verbindungsleitung
- 18 -: Stapelung Rohlinge
- 19 -: Stapelung bearbeitete Werkstücke
- 20a-20e -: Werkzeug
- 21,: 21a - Werkzeughalter
- 22a-22d -: Kulisse
- 23 -: Greifer
- 24 -: Finger
- 25 -: Hauptmotor
- 26 -: Steuerkasten
- 27 -: Steuerungsleitung
- 28 -: Gelenk
- 29 -: Ladevorrichtung
- 30a,: 30b - Temperatursensor
- 31 -: Ladeband
- 32a, 32b -: Stempel

- X -: Ist-Temperaturwert
- X' -: kritischer Ist-Temperaturwert
- Y -: Temperaturvergleichswert
- Z -: Verschleißgrad
- L -: Längsachse
- Q -: Querachse
- V -: Vertikalachse
- A -: Position des Greifers 23 am Spannfutter 11
- B -: Position des Greifers 23 bei Rohlinge-Stapelung 18
- C -: Position des Greifers 23 bei Bearbeitete-Werkstücke-Stapelung 19
- D -: Position an Eichfläche 15

## Patentansprüche

1. Bearbeitungsmaschine (10) zur automatisierten Serienbearbeitung von Werkstücken (1) mittels eines Werkzeugs (20), **dadurch gekennzeichnet, dass** die Bearbeitungsmaschine (10) umfasst:
• einen Temperatursensor (30) zum automatisierten Messen eines Ist-Temperaturwerts (X) eines Werkstücks (1),
• Speichermittel (2) zum Speichern mindestens eines Temperaturvergleichswerts (Y) eines identischen Werkstücks (1'),
• einen Rechner (3) zum Vergleichen des Ist-Temperaturwerts (X) mit dem Temperaturvergleichswert (Y) und zum Ermitteln, ob der Ist-Temperaturwert (X) als kritisch einzustufen ist, wobei beim Erreichen eines kritischen Ist-Temperaturwerts (X') eine Signalfunktion des Rechners einen Wechsel des Werkzeugs (20) auslöst.

2. Bearbeitungsmaschine (10) nach Anspruch 1, **dadurch gekennzeichnet, dass** der Rechner (3) mit einem Hauptschalter (7) und/oder einer Bremse (8) der Bearbeitungsmaschine (10) verbunden ist und die Signalfunktion des Rechners einen automatischen Stopp der Bearbeitungsmaschine (10) auslöst.

3. Bearbeitungsmaschine (10) nach Anspruch 1 oder 2, **dadurch gekennzeichnet, dass** der Rechner (3) mit einem Stellmotor (9) eines Werkzeughalters (21) des Werkzeugs (20) und/oder einem Stellmotor (9a) eines Spannfutters (11) des Werkstücks (1) verbindbar ist und ein automatisches Verfahren des Werkzeughalters (21) und/oder des Spannfutters (11) auslöst.

4. Bearbeitungsmaschine (10) nach einem der vorhergehenden Ansprüche, **dadurch gekennzeichnet, dass** der Rechner (3) mit einem Stellmotor (9b) des Werkzeughalters (21) verbindbar ist und einen automatischen Wechsel auf ein neues Werkzeug (20'), vorzugsweise mit den Anfangs-Bearbeitungskoordinaten des alten Werkzeugs (20), auslöst.

5. Bearbeitungsmaschine (10) nach einem der vorhergehenden Ansprüche, **dadurch gekennzeichnet, dass** der Temperatursensor (30) ein Kontakt-Messsensor (12) ist.

6. Bearbeitungsmaschine (10) nach Anspruch 5, **dadurch gekennzeichnet, dass** der Kontakt-Messsensor (12) an einem Einlege-Arm (13) zum Einlegen des Werkstücks (1) in das Spannfutter (11) und/oder an einem Herausnehme-Arm (14) zum Herausnehmen des Werkstücks (1) aus dem Spannfutter (11) angeordnet ist.

7. Bearbeitungsmaschine (10) nach einem der Ansprüche 5 oder 6, **dadurch gekennzeichnet, dass** eine Eichfläche (15) mit einer vorgegebenen AusgangsTemperatur für den Kontakt-Messsensor (12) vorgesehen ist.

8. Bearbeitungsmaschine (10) nach einem der Ansprüche 1-4, **dadurch gekennzeichnet, dass** der Temperatursensor (30) ein kontaktloser Infrarot-Messsensor (16) ist.

9. Bearbeitungsmaschine (10) nach einem der vorhergehenden Ansprüche, **dadurch gekennzeichnet, dass** sie CNC-steuerbar ist.

10. Verwendung eines Temperatursensors (30) in einer Bearbeitungsmaschine (10) nach einem der vorhergehenden Ansprüche 1-9 für die Ermittlung des Verschleißes, vorzugsweise des Verschleißgrades (Z), eines Werkzeugs (20) und für das Auslösen von automatisierten Prozessen in der Bearbeitungsmaschine (10).

11. Verwendung nach Anspruch 10, **dadurch gekennzeichnet, dass** der automatisierte Prozess der Bearbeitungsmaschine (10) ein automatischer Wechsel auf ein neues Werkzeug (20'), vorzugsweise mit den Anfangs-Bearbeitungskoordinaten des alten Werkzeugs (20), ist.

12. Verfahren zum Messen des Verschleißes (Z) eines Werkzeugs (20) in einer Bearbeitungsmaschine (10) nach einem der vorhergehenden Ansprüche 1-9, **dadurch gekennzeichnet, dass** in einem Speichermittel (2) ein Temperaturvergleichswert (Y) gespeichert ist und in dieser Reihenfolge
- in einem ersten Verfahrensschritt mit einem Temperatursensor (30) ein Ist-Temperaturwert (X) eines Werkstücks (1) gemessen wird;
- in einem zweiten Verfahrensschritt mit einem Rechner (3) der Ist-Temperaturwert (X) mit dem Temperaturvergleichswert (Y) verglichen wird;
- ein Steuersignal erzeugt wird, das einen Werkzeugwechsel auslöst oder einleitet.

13. Verfahren nach Anspruch 12, **dadurch gekennzeichnet, dass** in einem weiteren Verfahrensschritt durch den Rechner (3) automatisierte Prozesse der Bearbeitungsmaschine (10) ausgelöst werden.

14. Verfahren nach Anspruch 13, **dadurch gekennzeichnet, dass** der automatisierte Prozess der Bearbeitungsmaschine (10) ein automatischer Wechsel auf ein neues Werkzeug (20'), vorzugsweise mit den Anfangs-Bearbeitungskoordinaten des alten Werkzeugs (20), ist.
